# FASCICULE DE BREVET EUROPEEN

(11) **EP 4 134 290 B1**
(45) Date de publication et mention de la délivrance du brevet: **08.05.2024**
(21) Numéro de dépôt: 22187264.1
(22) Date de dépôt: 27.07.2022
(51) Int. Cl.: B61B 12/00, B61B 12/06, B61B 1/02

(54) **SYSTÈME DE CONTRÔLE DE FERMETURE DE PORTES**
SYSTEM ZUR KONTROLLE DER SCHLIESSUNG VON TÜREN
CONTROL SYSTEM FOR CLOSING DOORS

(30) Priorité: 11.08.2021 FR 2108643
(43) Date de publication de la demande: 15.02.2023
(73) Titulaire: POMA, 38340 Voreppe (FR)
(72) Inventeur: Mathieu, Christian, 38180 Seyssins (FR)
(74) Mandataire: Alatis

(56) Documents cités:
- EP-B1- 2 155 527
- DE-A1-102017 217 830
- JP-A- H04 339 067
- JP-B2- 5 348 981
- US-A1- 2020 101 986

## Description

### DOMAINE TECHNIQUE DE L'INVENTION

L'invention concerne, de façon générale, le domaine technique des installations destinées au transport de personnes par câble aérien de type télécabine, en particulier pour des remontées mécaniques utilisées dans les stations de ski ou pour des transports en commun en environnement urbain.

L'invention se rapporte plus spécifiquement à un système permettant de contrôler la bonne fermeture des portes des cabines dans une telle installation de transport par câble.

### ÉTAT DE LA TECHNIQUE ANTÉRIEURE

Une installation de transport par câble de type télécabine est un appareil à mouvement continu (circulant par exemple jusqu'à 5 à 7 m/s) qui comporte une pluralité de cabines disposées le long d'un câble tracteur aérien. Chaque cabine peut emporter un certain nombre de voyageurs, typiquement de 2 à 10 voyageurs en général.

De façon connue, chaque cabine d'une télécabine possède deux portes (appelées aussi vantaux) qui s'ouvrent et se ferment automatiquement durant le passage de la cabine dans des gares de départ et d'arrivée (appelées aussi stations), de façon à permettre la descente et la montée des voyageurs. Le mouvement d'ouverture et de fermeture des deux portes peut être coulissant ou louvoyant. Le terme coulissant signifie ici que le mouvement des deux portes ne se fait que suivant un seul axe (appelé axe d'ouverture/fermeture), alors que le terme louvoyant signifie que les deux portes font en plus un léger mouvement dans un axe perpendiculaire, généralement pour se dégager vers l'extérieur de la coque de la cabine lors du mouvement d'ouverture.

Dans la version la plus répandue, les cabines sont dites débrayables du câble tracteur principal de la télécabine, c'est-à-dire que chaque cabine possède un système d'attache (ou pince) débrayable qui peut se désaccoupler du câble tracteur lorsqu'elles sont dans les gares. Cependant sur la plupart des installations, même si elles sont débrayées du câble tracteur, les cabines restent néanmoins en mouvement à petite vitesse (par exemple de l'ordre de 0,3 à 0,5 m/s) durant les opérations de débarquement et d'embarquement des voyageurs, de façon à minimiser les temps de passage en gare.

L'ouverture et la fermeture des portes d'une cabine se fait généralement automatiquement dans la gare une fois que la cabine est débrayée, grâce par exemple à des moyens mécaniques de type ressorts et cames. Cependant, avant de réaccoupler la cabine au câble tracteur en sortie de gare, il convient de s'assurer, pour des raisons évidentes de sécurité, que les portes de la cabine sont bien fermées, ou plus exactement qu'elles se trouvent dans une position autorisée. En effet, pour autoriser le ré-accouplement de la cabine au câble tracteur en sortie de gare, il est admis que les portes d'une cabine peuvent ne pas être complètement fermées mais conserver un petit écart d'ouverture entre elles pour être considérées comme fermées.

Cette opération de contrôle de position des portes se fait lorsque la cabine circule à petite vitesse dans une zone dite zone de contrôle. Si cette opération de contrôle n'est pas concluante (i.e. si les portes ne sont pas bien positionnées), la cabine n'est évidemment pas réaccouplée au câble tracteur et un défaut d'ouverture des portes est signalé.

Il existe déjà des systèmes de contrôle des portes qui utilisent des moyens mécaniques en contact avec les portes de cabine pour surveiller leur fermeture. Ces moyens sont cependant assez lourds à installer, sont complexes à régler et sont de plus mieux adaptés aux portes ayant un mouvement louvoyant qu'à celles n'ayant qu'un mouvement coulissant.

Le document EP2067682A1 décrit par ailleurs un système de surveillance de portes qui comprend des moyens de verrouillage et de détection situés à l'intérieur de la cabine ainsi que des moyens électroniques de communication pour transmettre à un poste central dans la gare les informations relatives à ces moyens de détection, de façon à autoriser ou non le départ de la cabine. Mais avec un tel système, il faut donc que chacune des cabines de l'installation de transport soit équipée de ces moyens de détection et de ces moyens de communication.

D'autres systèmes de surveillance de portes de télécabine sont connus des documents JP5348981B2, JPH04339067A et US2020/101986A1.

### EXPOSE DE L'INVENTION

C'est pourquoi l'invention vise à remédier à tout ou partie des inconvénients de l'état de la technique en proposant un système de contrôle de la position des portes des cabines d'une télécabine qui soit facile à mettre en oeuvre et qui n'embarque pas de moyens électroniques à l'intérieur de chaque cabine, ceci pour des raisons évidentes de coût et de simplicité de la solution, et qui en plus soit bien adapté aux portes coulissantes.

Pour cela l'invention décrit un système de contrôle de position des portes d'une cabine en mouvement dans une installation de transport par câble, la cabine comprenant deux portes et le système de contrôle comprenant une unité électronique de contrôle. Le système de contrôle est caractérisé en ce qu'il comporte une cible de détection sur chaque porte et un dispositif de détection fixe, de type détecteur de proximité ayant un champ d'action et émettant un signal de détection lors du passage d'une cible dans le champ d'action, qui est connecté à l'unité de contrôle et qui est placé de façon à pouvoir émettre un signal de détection lors du passage de la cabine dans une zone de contrôle, et en ce que l'unité de contrôle décide que les deux portes de la cabine sont bien positionnées si l'écart entre les deux portes est inférieur à un seuil d'ouverture prédéterminé.

Selon une caractéristique, le dispositif de détection comprend deux capteurs fixes, et l'unité de contrôle décide que les deux portes de la cabine sont bien positionnées si elle reçoit simultanément un signal de détection des deux capteurs durant le passage de la cabine dans la zone de contrôle.

Selon une autre caractéristique, le dispositif de détection comporte un seul capteur fixe et l'unité de contrôle décide que les deux portes de la cabine sont bien positionnées si elle reçoit dudit capteur un premier signal de détection, puis un second signal de détection au bout d'un temps inférieur à un temps maximum. Selon une autre caractéristique, l'unité de contrôle mesure la position de la cabine dans la zone de détection, pour déterminer le temps maximum.

Selon une autre caractéristique, si l'unité de contrôle décide que les deux portes ne sont pas bien positionnées durant le passage de la cabine dans la zone de contrôle, alors elle signale un défaut d'ouverture des portes de la cabine. L'unité de contrôle émet un ordre d'arrêt de la cabine en cas de défaut d'ouverture des portes.

Selon une autre caractéristique, les cibles sont passives et n'ont pas besoin d'alimentation électrique.

Selon une autre caractéristique, les cibles sont des cibles aimantées et les capteurs sont des détecteurs de proximité magnétiques, ou les cibles sont des cibles métalliques et les capteurs sont des détecteurs de proximité inductifs, ou les cibles sont des cibles réfléchissantes et les capteurs sont des détecteurs photoélectriques.

L'invention décrit également une installation de transport par câble aérien de type télécabine comprenant une pluralité de cabines, caractérisée en ce que l'installation de transport comporte un système de contrôle de position des portes des différentes cabines de l'installation.

### BRÈVE DESCRIPTION DES FIGURES

D'autres caractéristiques et avantages de l'invention ressortiront à la lecture de la description qui suit, en référence aux figures annexées dans lesquelles :
[Fig. 1] : la figure 1 montre une vue schématique simplifiée d'un exemple de cabine conforme à l'invention,
[Fig. 2] : la figure 2 représente ladite cabine dans son environnement dans la zone de contrôle d'une gare de télécabine, selon un premier mode de réalisation,
[Fig. 3] : la figure 3 détaille un schéma relatif à un autre mode de réalisation de l'invention.

### DESCRIPTION DÉTAILLÉE D'UN MODE DE RÉALISATION

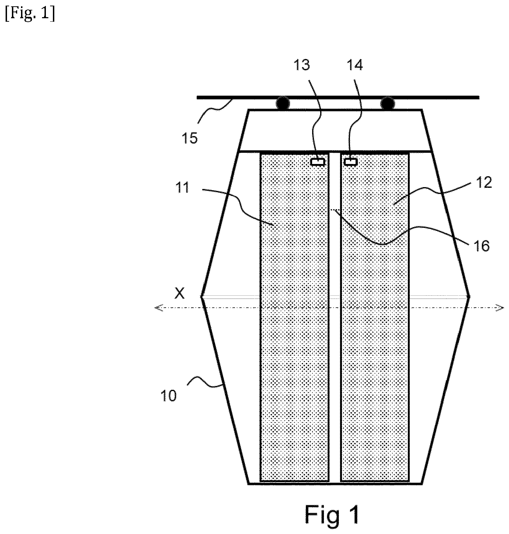

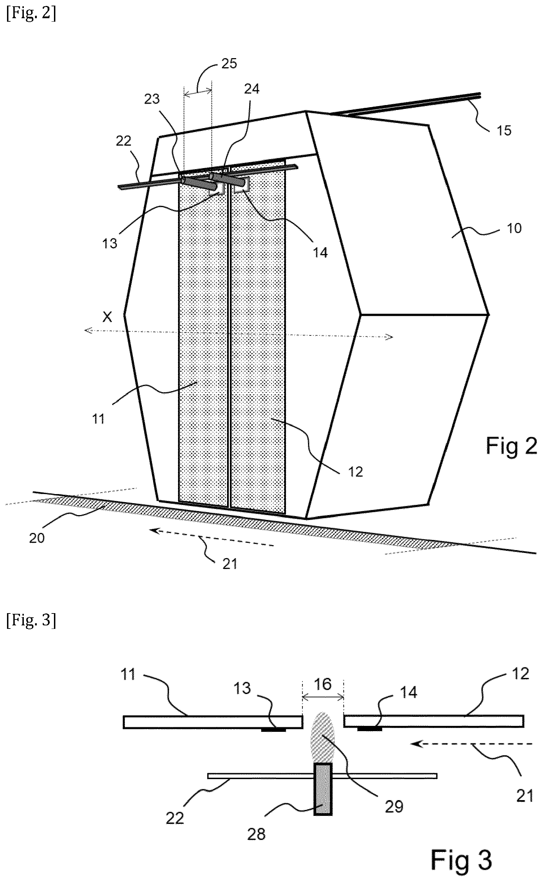

Les figures 1 et 2 montrent une cabine 10 utilisée dans une installation de transport par câble aérien de type télécabine. La télécabine comprend un grand nombre de cabines qui sont entraînées par un câble tracteur principal et qui sont débrayables lorsque les cabines sont dans les différentes gares que peut comporter la télécabine. Chaque cabine 10 comporte deux portes mobiles, en l'occurrence une première porte 11 et une seconde porte 12. Préférentiellement, les deux portes sont coulissantes selon un axe X, sensiblement parallèle à la direction du mouvement de la cabine 10. La cabine 10 est par exemple suspendue à un rail 15 lorsqu'elle circule dans la gare et qu'elle est débrayée du câble tracteur principal.

Lors du passage de la cabine 10 dans une gare, l'ouverture et la fermeture des portes 11 et 12 sont déclenchées automatiquement par des moyens connus non représentés sur les figures. Cependant, avant le départ de chaque cabine d'une gare, la télécabine comporte un système de contrôle de la position des portes de la cabine pour vérifier que les portes soient fermées, ou plus précisément qu'elles soient bien positionnées.

On précise en effet que, dans le cadre du présent document, les portes 11 et 12 de la cabine 10 sont dites bien positionnées pour autoriser le départ de la cabine 10 hors de la gare, s'il existe un écart 16 entre les portes 11 et 12 qui est inférieur à un seuil d'ouverture prédéterminé S. Les normes actuellement en vigueur autorisent un écart maximal d'ouverture égal à 110 mm entre les portes d'une cabine pour autoriser de réaccoupler la cabine au câble tracteur, mais une installation de transport peut évidemment décider d'un seuil d'ouverture S inférieur à ce seuil maximal imposé par les normes.

Le système de contrôle comporte une unité de contrôle électronique non représentée sur les figures, par exemple de type ordinateur, automate programmable ou équivalent. L'unité de contrôle est placée dans la gare et est notamment en charge de vérifier la bonne position des portes de la cabine au moment du passage de la cabine 10 dans une zone appelée zone de contrôle 20. Dans cette zone de contrôle 20, la cabine est mobile et circule à petite vitesse selon une direction 21 qui est sensiblement parallèle à l'axe X. La zone de contrôle 20 est préférentiellement située après que les passagers soient montés dans la cabine 10 et avant de réaccoupler la cabine 10 sur le câble tracteur principal pour un départ de la gare.

Si l'unité de contrôle décide que les portes 11, 12 ne sont pas bien positionnées, c'est-à-dire qu'elles sont trop ouvertes car l'écart 16 est supérieur au seuil d'ouverture prédéterminé S, alors l'unité de contrôle signale un défaut d'ouverture par divers moyens classiques (alarme, message de défaut, ...) et peut également commander l'arrêt de la cabine 10 pour qu'une intervention humaine puisse se faire.

Pour cela, l'invention prévoit que les portes 11, 12 comportent chacune une cible de détection 13, 14. En l'occurrence la première porte 11 comporte une première cible 13 et la seconde porte 14 comporte une seconde cible 14. Préférentiellement, les cibles 13, 14 sont passives et n'ont donc avantageusement pas besoin d'une alimentation électrique dans la cabine. On pourrait cependant tout à fait envisager également des cibles actives, par exemple alimentées par batterie.

Le système de contrôle comporte également un dispositif de détection qui est fixe dans la gare et qui est connecté à l'unité de contrôle. Ce dispositif de détection comprend un ou plusieurs capteurs qui sont du type détecteur de proximité, c'est-à-dire doté d'un champ d'action (appelé aussi lobe de détection) et émettant un signal électrique de détection lorsqu'une cible se situe dans son champ d'action.

Dans un premier mode de réalisation préféré décrit en figure 2, le dispositif de détection fixe comprend deux capteurs 23, 24 distincts et généralement identiques qui sont fixés par exemple à une barre 22, mais d'autres moyens de fixation sont évidemment possibles.

Le premier capteur 23 est placé de façon à pouvoir détecter la première cible 13 durant le passage de la cabine 10 dans la zone de contrôle 20 et le second capteur 24 est placé de façon à pouvoir détecter la seconde cible 14 durant le passage de la cabine 10 dans la zone de contrôle 20. Ainsi, quand une cible 13, respectivement 14, passe à proximité du capteur fixe 23, respectivement 24, l'unité de contrôle reçoit un signal électrique venant de ce capteur 23, respectivement 24.

Selon l'invention, l'unité de contrôle décide que les portes 11, 12 de la cabine 10 sont bien positionnées si et seulement si l'unité de contrôle reçoit simultanément un signal électrique venant des deux capteurs 23, 24 à un instant donné durant le passage de la cabine 10 dans la zone de contrôle 20. En effet, cela signifie qu'à cet instant donné, les deux cibles 13, respectivement 14, sont placées en vis-à-vis des deux capteurs 23, respectivement 24 et donc que l'écart 16 entre les portes 11 et 12 est inférieur au seuil d'ouverture S.

Les réglages du positionnement en hauteur et en profondeur des deux capteurs fixes 23, 24 est donc important pour que les cibles 13, respectivement 14, rentrent bien dans le champ d'action de leur capteur correspondant 23, respectivement 24, lors du passage de la cabine 10. De plus, le réglage de la distance 25 entre les deux capteurs 23, 24 selon l'axe X est essentiel car cette distance 25 détermine la valeur du seuil d'ouverture S qui est admis par l'unité de contrôle pour que les deux portes des cabines soient considérées comme bien positionnées. On rappelle que les portes sont considérées comme bien positionnées si leur écart d'ouverture 16 est inférieur au seuil d'ouverture S, c'est-à-dire que la valeur admise de l'écart 16 peut aller de 0 (signifiant que les portes sont complètement fermées) jusqu'au seuil S.

Comme les capteurs 23, 24 sont fixes par rapport au sol de la gare et que les cibles 13, 14 sont fixées sur les portes 11, 12, ça signifie que la valeur du seuil d'ouverture S est fonction de la distance 25 entre les deux capteurs 23, 24 et que la valeur admise de l'écart 16 entre les portes est fonction de la largeur des cibles 13, 14 (en ne prenant pas en compte évidemment la largeur du lobe de détection des capteurs 23, 24). Par exemple, pour obtenir un écart admis qui soit compris entre 0 et un seuil S égal à 110mm, il faut que chaque cible 13, 14 ait une largeur égale à 55mm selon l'axe X.

Par ailleurs, de façon à donner une certaine tolérance dans le sens de la hauteur, toutes les cibles 13, 14 possèdent préférentiellement une hauteur assez significative selon un axe perpendiculaire à X pour compenser un décalage vertical possible de la cabine 10, en particulier en fonction du nombre de passagers embarqués dans la cabine. Par exemple, la hauteur des cibles 13, 14 est de l'ordre de 25mm. Grâce à cela, les cibles 13, 14 rentrent dans le champ d'action de leur capteur respectif quel que soit le poids de la cabine 10.

Lors du passage de la cabine 10 mobile dans la zone de contrôle 20 selon la direction 21, le fonctionnement est le suivant :
- a) Avant l'arrivée de la cabine 10, aucun des capteurs 23, 24 n'est évidemment situé devant une cible 13, 14, donc l'unité de contrôle ne reçoit pas de signal.
- b) A un moment donné, la première porte 11 va passer devant le second capteur 24, qui va donc détecter le passage de la première cible 13 dans son champ d'action alors que le premier capteur 23 ne détecte encore rien. Donc l'unité de contrôle reçoit seulement un signal venant du second capteur 24.
- c) Puis, la première cible 13 va sortir du champ d'action du second capteur 24 pour rentrer ensuite dans le champ d'action du premier capteur 23. Si, à un instant donné, le second capteur 24 détecte que la second cible 14 est également dans son champ d'action, alors ça signifie que l'écart entre les portes 11, 12 est inférieur au seuil d'ouverture S. L'unité de contrôle reçoit alors simultanément un signal des deux capteurs 23, 24 et décide que les portes sont bien positionnées. Si au contraire les portes 11 et 12 sont trop ouvertes, alors la première cible 13 va sortir du champ d'action du premier capteur 23 avant que la seconde cible 14 n'entre dans le champ d'action du second capteur 24. L'unité de contrôle ne recevra donc jamais simultanément un signal des deux capteurs 23, 24, et elle pourra signaler un défaut d'ouverture des portes de la cabine 10.
- d) Enfin, à la fin de passage de la cabine 10 dans la zone de contrôle 20, le premier capteur 23 détecte le passage de la seconde cible 14 mais le second capteur 24 ne détecte plus rien.

L'entrée et la sortie de la cabine 10 dans la zone de contrôle 20 peut être signalée à l'unité de contrôle par l'intermédiaire d'un moyen de détection quelconque connu. Cela permet à l'unité de contrôle de savoir qu'une cabine 10 est présente dans la zone de contrôle 20 et de surveiller si les deux capteurs 23, 24 ont bien envoyé simultanément leur signal durant le passage de la cabine 10 entre l'entrée et la sortie de la zone de contrôle 20.

Préférentiellement, les cibles 13 et 14 sont de simples plaques aimantées et les capteurs 23, 24 sont des détecteurs de proximité magnétiques. Cette solution est simple, peu onéreuse et permet d'avoir un champ d'action des capteurs jusqu'à une distance d'environ 100mm, ce qui permet d'éloigner les capteurs par rapport aux cibles. Néanmoins d'autres variantes sont tout à fait possibles, comme par exemple utiliser des cibles métalliques avec des détecteurs de proximité inductifs ou des cibles réfléchissantes avec des détecteurs de proximité photoélectriques.

De plus, si le champ d'action du dispositif de détection est suffisamment important par rapport au déplacement des portes suivant l'axe perpendiculaire à X, l'invention peut aussi être adaptée aux cabines à portes louvoyantes.

Dans l'exemple présenté dans les figures, les cibles 13, 14 sont placées en haut des portes et à une même hauteur l'une par rapport à l'autre, de même bien entendu que les capteurs 23, 24. D'autres alternatives sont cependant réalisables comme par exemple avoir une première cible 13 fixée sur la première porte 11 à une hauteur différente par rapport à la seconde cible 14 et donc respectivement un premier capteur 23 fixé à une hauteur différente par rapport au second capteur 24. Cela permet d'éviter que le premier capteur 23 puisse détecter la seconde cible 14 et inversement que le second capteur 24 détecte la première cible 13, durant le passage de la cabine 10 en zone de contrôle 20 (voir ci-dessus les cas b) et d) du fonctionnement décrit ci-dessus). Cependant, cette alternative n'améliore pas réellement le fonctionnement décrit car, quelle que soit la configuration des cibles, la condition importante dans ce premier mode de réalisation pour l'unité de contrôle est toujours de recevoir simultanément un signal des deux capteurs 23, 24 à un moment donné lors du passage de la cabine 10 en zone de contrôle.

Dans un deuxième mode de réalisation qui est détaillé en figure 3, le dispositif de détection ne comprend qu'un seul capteur 28 fixe de type détecteur de proximité. Ce capteur 28 peut être similaire aux deux capteurs 23 et 24 décrits précédemment. Dans la gare, le capteur 28 peut être fixé par exemple à la barre 22 comme vu précédemment, mais d'autres moyens de fixation sont évidemment possibles. Le capteur fixe 28 est placé de façon à pouvoir détecter la première cible 13 puis la seconde cible 14 durant le passage de la cabine 10 dans la zone de contrôle 20. Ainsi, quand une cible 13, respectivement 14, passe dans le champ d'action 29 du capteur 28, l'unité de contrôle reçoit un signal électrique de détection venant de ce capteur 28.

Le fonctionnement implique alors la séquence suivante : durant le passage de la cabine 10 dans la zone de contrôle 20 selon la direction 21, la première cible 13 de la première porte 11 va passer dans le champ d'action 29 du capteur 28 lequel envoie donc un premier signal de détection S1 à l'unité de contrôle. Puis la première cible 13 va sortir du champ d'action 29 du capteur 28 ce qui stoppe le premier signal S1. Ensuite, la seconde cible 14 de la seconde porte 12 va à son tour passer dans le champ d'action 29 du capteur 28 lequel envoie alors un second signal de détection S2 à l'unité de contrôle.

Dans ce deuxième mode de réalisation, l'unité de contrôle décide que les portes 11, 12 de la cabine 10 sont bien positionnées durant le passage de la cabine 10 dans la zone de contrôle 20 si et seulement si le premier signal de détection S1 et le second signal de détection S2 sont espacés d'un temps T qui est inférieur à un temps maximum. Ce temps maximum est fonction de la position des cibles 13, 14 sur les portes 11, 12, du seuil d'ouverture S prédéterminé et de la vitesse V de la cabine 10 dans la zone de contrôle 20.

Le passage de la cabine 10 se faisant généralement à vitesse constante dans la zone de contrôle 20, on pourrait se contenter de prendre cette vitesse constante pour déterminer la vitesse V de la cabine 10 et donc le temps maximum. Néanmoins, il est préférable de calculer la vitesse réelle de la cabine 10 pour obtenir une meilleure précision. Pour cela, l'unité de contrôle peut avantageusement recevoir en temps réel une information représentative de la position de la cabine 10, par exemple grâce à un codeur incrémental sur le rail 15 ou à d'autres moyens connus. Grâce à cette information, l'unité de contrôle connaît en permanence la vitesse réelle V de passage de la cabine 10 dans la zone de contrôle 20 et peut donc, à partir du temps T mesuré entre les deux signaux S1 et S2, en déduire l'écart réel 16 entre les deux portes 11, 12 de façon à vérifier s'il est inférieur au seuil d'ouverture S prédéterminé, et donc que les portes 11, 12 sont bien positionnées.

Par ailleurs, comme indiqué dans le premier mode de réalisation, l'entrée et la sortie de la cabine 10 dans la zone de contrôle 20 peut être signalée à l'unité de contrôle par l'intermédiaire d'un moyen de détection quelconque connu. Cela permet à l'unité de contrôle de savoir quand surveiller la réception des deux signaux S1 et S2.

Ainsi, grâce à l'invention, la partie du système de contrôle qui est embarquée dans chaque cabine est très limitée puisqu'elle comprend seulement une cible sur chaque porte, sans électronique embarquée, sans moyen mécanique particulier au sol. De plus, les cibles sont préférentiellement passives ce qui permet en plus d'éviter de prévoir une alimentation électrique. Dans les deux modes de réalisation, l'invention est donc très économique, facile à mettre en oeuvre et ne nécessite pas de maintenance. En particulier, aucune communication ni liaison électrique entre les différentes cabines et l'unité de contrôle dans la gare ne sont nécessaires pour ce système de contrôle.

Naturellement, l'invention est décrite dans ce qui précède à titre d'exemple. Il est entendu que l'homme du métier est à même de réaliser différentes variantes de réalisation de l'invention sans pour autant sortir du cadre des revendications jointes.

## Revendications

1. Système de contrôle de position des portes d'une cabine en mouvement dans une installation de transport par câble, la cabine (10) comprenant deux portes (11, 12) et le système de contrôle comprenant une unité électronique de contrôle, **caractérisé en ce que** le système de contrôle comporte : une cible de détection (13, 14) sur chaque porte (11, 12) et un dispositif de détection fixe (23, 24, 28), de type détecteur de proximité ayant un champ d'action et émettant un signal de détection lors du passage d'une cible dans le champ d'action, le dispositif de détection étant connecté à l'unité électronique de contrôle et étant placé de façon à pouvoir émettre un signal de détection lors du passage de la cible de détection (13, 14) de chaque porte (11, 12) de la cabine (10) dans une zone de contrôle (20), et **en ce que** l'unité de contrôle décide, en fonction du signal de détection émis lors du passage de la cible de détection de chaque porte (11, 12) de la cabine dans la zone de contrôle (20), que les deux portes (11, 12) de la cabine (10) sont bien positionnées si un écart (16) entre les portes (11, 12) est inférieur à un seuil d'ouverture prédéterminé.

2. Système de contrôle selon la revendication 1, **caractérisé en ce que** le dispositif de détection comprend deux capteurs fixes (23, 24), et l'unité électronique de contrôle décide que les deux portes (11, 12) de la cabine (10) sont bien positionnées si elle reçoit simultanément un signal de détection des deux capteurs (23, 24) durant le passage de la cabine (10) dans la zone de contrôle (20).

3. Système de contrôle selon la revendication 1, **caractérisé en ce que** le dispositif de détection comporte un seul capteur fixe (28) et l'unité électronique de contrôle décide que les deux portes (11, 12) de la cabine (10) sont bien positionnées si elle reçoit dudit capteur (28) un premier signal de détection, puis un second signal de détection au bout d'un temps inférieur à un temps maximum.

4. Système de contrôle selon la revendication 3, **caractérisé en ce que**, pour déterminer le temps maximum, l'unité électronique de contrôle mesure la position de la cabine (10) dans la zone de contrôle (20).

5. Système de contrôle selon l'une des revendications précédentes, **caractérisé en ce que**, si l'unité électronique de contrôle décide que les deux portes (11, 12) ne sont pas bien positionnées durant le passage de la cabine (10) dans la zone de contrôle (20), alors elle signale un défaut d'ouverture des portes (11, 12) de la cabine (10).

6. Système de contrôle selon la revendication 5, **caractérisé en ce que** l'unité électronique de contrôle émet un ordre d'arrêt de la cabine en cas de défaut d'ouverture des portes (11, 12).

7. Système de contrôle selon l'une des revendications précédentes, **caractérisé en ce que** les cibles (13, 14) sont passives et n'ont pas besoin d'alimentation électrique.

8. Système de contrôle selon l'une des revendications précédentes, **caractérisé en ce que** les cibles (13, 14) sont des cibles aimantées et les capteurs (23, 24) sont des détecteurs de proximité magnétiques.

9. Système de contrôle selon l'une des revendications précédentes, **caractérisé en ce que** les cibles sont des cibles métalliques et les capteurs sont des détecteurs de proximité inductifs.

10. Système de contrôle selon l'une des revendications précédentes, **caractérisé en ce que** les cibles sont des cibles réfléchissantes et les capteurs sont des détecteurs photoélectriques.

11. Système de contrôle selon l'une des revendications précédentes, **caractérisé en ce que** les portes (11, 12) de la cabine (10) sont des portes coulissantes.

12. Système de contrôle selon l'une des revendications précédentes, **caractérisé en ce que** les portes (11, 12) de la cabine (10) sont des portes louvoyantes.

13. Installation de transport par câble aérien de type télécabine comprenant une pluralité de cabines (10), **caractérisée en ce que** l'installation de transport comporte un système de contrôle de position des portes (11, 12) des cabines (10) de l'installation selon l'une des revendications précédentes.

## Patentansprüche

1. System für eine Positionsprüfung von Türen einer sich bewegenden Kabine in einer Seilbahnanlage, die Kabine (10) umfassend zwei Türen (11, 12) und das Prüfsystem umfassend eine elektronische Prüfeinheit,
**dadurch gekennzeichnet, dass** das Prüfsystem vorweist: ein Erfassungsziel (13, 14) an jeder Tür (11, 12) und eine feste Erfassungsvorrichtung (23, 24, 28) der Art eines Näherungsdetektors, der einen Wirkungsbereich aufweist und ein Erfassungssignal aussendet, wenn ein Ziel durch den Wirkungsbereich läuft, wobei die Erfassungsvorrichtung mit der elektronischen Prüfeinheit verbunden und angebracht ist, um ein Erfassungssignal aussenden zu können, wenn das Erfassungsziel (13, 14) jeder Tür (11, 12) der Kabine (10) eine Prüfzone (20) durchläuft, und dass die Prüfeinheit in Abhängigkeit von dem ausgesendeten Erfassungssignal entscheidet, wenn das Erfassungsziel jeder Tür (11, 12) der Kabine die Prüfzone (20) durchläuft, dass die zwei Türen (11, 12) der Kabine (10) richtig positioniert sind, wenn ein Abstand (16) zwischen den Türen (11, 12) kleiner als ein vorbestimmter Öffnungsschwellenwert ist.

2. Prüfsystem nach Anspruch 1, **dadurch gekennzeichnet, dass** die Erfassungsvorrichtung zwei feste Sensoren (23, 24) umfasst und die elektronische Prüfeinheit entscheidet, dass die zwei Türen (11, 12) der Kabine (10) richtig positioniert sind, falls sie während des Durchlaufs der Kabine (10) durch die Prüfzone (20) ein Erfassungssignal von den zwei Sensoren (23, 24) gleichzeitig empfängt.

3. Prüfsystem nach Anspruch 1, **dadurch gekennzeichnet, dass** die Erfassungsvorrichtung einen einzigen festen Sensor (28) vorweist und die elektronische Prüfeinheit entscheidet, dass die zwei Türen (11, 12) der Kabine (10) richtig positioniert sind, falls sie von dem Sensor (28) ein erstes Erfassungssignal und dann ein zweites Erfassungssignal nach einer Zeit, die kleiner als eine maximale Zeit ist, empfängt.

4. Prüfsystem nach Anspruch 3, **dadurch gekennzeichnet, dass** zum Bestimmen der maximalen Zeit die elektronische Prüfeinheit die Position der Kabine (10) in der Prüfzone (20) misst.

5. Prüfsystem nach einem der vorstehenden Ansprüche,
**dadurch gekennzeichnet, dass,** falls die elektronische Prüfeinheit entscheidet, dass die zwei Türen (11, 12) während des Durchlaufs der Kabine (10) durch die Prüfzone (20) nicht richtig positioniert sind, sie dann einen Öffnungsfehler der Türen (11, 12) der Kabine (10) signalisiert.

6. Prüfsystem nach Anspruch 5, **dadurch gekennzeichnet, dass** die elektronische Prüfeinheit einen Befehl zum Anhalten der Kabine, in dem Fall eines Öffnungsfehlers der Türen (11, 12), aussendet.

7. Prüfsystem nach einem der vorstehende Ansprüche,
**dadurch gekennzeichnet, dass** die Ziele (13, 14) passiv sind und keine Elektrizitätsversorgung benötigen.

8. Prüfsystem nach einem der vorstehende Ansprüche,
**dadurch gekennzeichnet, dass** die Ziele (13, 14) magnetische Ziele sind und die Sensoren (23, 24) magnetische Näherungsdetektoren sind.

9. Prüfsystem nach einem der vorstehende Ansprüche,
**dadurch gekennzeichnet, dass** die Ziele metallische Ziele sind und die Sensoren induktive Näherungsdetektoren sind.

10. Prüfsystem nach einem der vorstehende Ansprüche,
**dadurch gekennzeichnet, dass** die Ziele reflektierende Ziele sind und die Sensoren fotoelektrische Detektoren sind.

11. Prüfsystem nach einem der vorstehende Ansprüche,
**dadurch gekennzeichnet, dass** die Türen (11, 12) der Kabine (10) Schiebetüren sind.

12. Prüfsystem nach einem der vorstehende Ansprüche,
**dadurch gekennzeichnet, dass** die Türen (11, 12) der Kabine (10) Schwingtüren sind.

13. Luftseilbahnanlage der Art Gondelbahn, umfassend eine Vielzahl von Kabinen (10), **dadurch gekennzeichnet, dass** die Transportanlage ein System für eine Positionsprüfung von Türen (11, 12) der Kabinen (10) der Anlage nach einem der vorstehenden Ansprüche vorweist.

## Claims

1. A system for controlling the position of the doors of a moving cabin in a cable transport installation, the cabin (10) comprising two doors (11, 12) and the control system comprising an electronic control unit, **characterized in that** the control system comprises: a detection target (13, 14) on each door (11, 12) and a fixed detection device (23, 24, 28), of the proximity detector type, having a field of action and emitting a detection signal when a target passes into the field of action, the detection device being connected to the electronic control unit and being placed so as to be able to emit a detection signal when the detection target (13, 14) of each door (11, 12) of the cabin (10) passes into a control zone (20), and **in that** the control unit decides, according to the detection signal emitted when the detection target of each door (11, 12) of the cabin passes into the control zone (20), that the two doors (11, 12) of the cabin (10) are correctly positioned, if a gap (16) between the doors (11, 12) is less than a predetermined opening threshold.

2. The control system according to claim 1, **characterized in that** the detection device comprises two fixed sensors (23, 24), and the electronic control unit decides that the two doors (11, 12) of the cabin (10) are correctly positioned if it simultaneously receives a detection signal from the two sensors (23, 24) when the cabin (10) passes into the control zone (20).

3. The control system according to claim 1, **characterized in that** the detection device comprises a single fixed sensor (28) and the electronic control unit decides that the two doors (11, 12) of the cabin (10) are correctly positioned if it receives, from said sensor (28), a first detection signal then a second detection signal after a time less than a maximum time.

4. The control system according to claim 3, **characterized in that,** in order to determine the maximum time, the electronic control unit measures the position of the cabin (10) in the control zone (20).

5. The control system according to any of the preceding claims, **characterized in that,** if the electronic control unit decides that the two doors (11, 12) are not correctly positioned when the cabin (10) passes into the control zone (20), then it signals an opening failure of the doors (11, 12) of the cabin (10).

6. The control system according to claim 5, **characterized in that** the electronic control unit issues an order to stop the cabin in the event of an opening failure of the doors (11, 12).

7. The control system according to any of the preceding claims, **characterized in that** the targets (13, 14) are passive and do not require electrical power.

8. The control system according to any of the preceding claims, **characterized in that** the targets (13, 14) are magnetized targets and the sensors (23, 24) are magnetic proximity detectors.

9. The control system according to any of the preceding claims, **characterized in that** the targets are metal targets and the sensors are inductive proximity detectors.

10. The control system according to any of the preceding claims, **characterized in that** the targets are reflective targets and the sensors are photoelectric detectors.

11. The control system according to any of the preceding claims, **characterized in that** the doors (11, 12) of the cabin (10) are sliding doors.

12. The control system according to any of the preceding claims, **characterized in that** the doors (11, 12) of the cabin (10) are sliding plug doors.

13. An aerial cable transport installation of the gondola type comprising a plurality of cabins (10), **characterized in that** the transport installation comprises a system for controlling the position of the doors (11, 12) of the cabins (10) of the installation according to any of the preceding claims.
